# EUROPÄISCHE PATENTSCHRIFT

(11) **EP 1 691 165 B1**
(45) Veröffentlichungstag und Bekanntmachung des Hinweises auf die Patenterteilung: **09.01.2008**
(21) Anmeldenummer: 06002214.2
(22) Anmeldetag: 03.02.2006
(51) Int. Cl.: G01B 7/00, G01D 5/20

(54) **Vorrichtung zur Ueberprüfung der Mass-, Form- und Lagetoleranzen eines mechanischen Werkstueckes**
Apparatus for checking tolerances of dimension, shape and position of a mechanical part
Dispositif destiné à la vérification des tolérances de dimension, de forme et de position d'une pièce mécanique

(30) Priorität: 15.02.2005 DE 202005002372 U
(43) Veröffentlichungstag der Anmeldung: 16.08.2006
(73) Patentinhaber: Knäbel, Horst, Dipl.-Ing., D-40667 Meerbusch (DE)
(72) Erfinder: Knäbel, Horst, Dipl.-Ing., D-40667 Meerbusch (DE)
(74) Vertreter: Kossobutzki, Walter

(56) Entgegenhaltungen:
- WO-A-03/044334
- DE-A1- 19 512 836
- US-A- 4 543 732

## Beschreibung

Die Erfindung bezieht sich auf eine Vorrichtung zur Überprüfung der Maß-, Form- und Lagetoleranzen eines mechanischen Werkstückes, bestehend aus mindestens einem Messtaster mit jeweils einem an einem Träger befestigbaren Gehäuse mit zwei getrennten Induktionsspulen und einem sich auf der Messoberfläche des Werkstückes abstützenden und aus einem nichtmagnetisierbaren Werkstoff gebildeten Taststift, der als Kolben ausgebildet ist und einen als Hülse ausgebildeten Ablenkkörper trägt, wobei der Taststift mit dem Ablenkkörper durch eine Kraft in seine Messstellung bewegbar ist.

Ein derartiger Messtaster ist aus der deutschen Offenlegungsschrift 195 12 836 bekannt. In dem durch eine der Abdichtung und der Führung der Hülse dienenden Platte abgedeckten Gehäuse dieses Messtasters befinden sich zur Bildung einer sogenannten Halbbrücke nebeneinander - eingebettet in zwei aus einem magnetisierbaren Werkstoff bestehenden Spulenträgern - eine Mess-Induktionsspule und eine Kompensations-Induktionsspule mit nach außen geführten Anschlussleitungen. Eine als Ablenkkörper wirkende Spulenkernhülse befindet sich auf dem Taststift und ragt in ihrer Ausgangsstellung nur geringfügig in die Mess-Induktionsspule hinein. Mit der Zunahme des Messweges steigt die Eintauchtiefe der Spulenkernhülse in die Mess-Induktionsspule an. Die Eintauchtiefe des der Kompensations-Messspule zugeordneten Ablenkkörpers ist zwar manuell einstellbar, bleibt aber vom Messweg und damit vom Hub des Taststiftes unbeeinflusst. Ein von dem Messtaster und dem Träger begrenzter Raum unterhalb der das Gehäuse abdeckenden Platte kann mit einem Druckmedium beaufschlagt werden, durch das der Taststift am Werkstück zum Anliegen gebracht wird. Der dabei zurückgelegte Weg entspricht dem Messweg, der über die dabei auftretende Widerstandsänderung zwischen den in Reihe geschalteten Induktionsspulen abgegriffen werden kann.

Da sich bei einem solchen Messtaster aber nur die Impedanz der Mess-Induktionsspule in Abhängigkeit vom Messweg ändert, ändert sich der Gesamtwiderstand im gleichen Maße und damit auch die Stromaufnahme, so dass sich das Messsignal nicht annähernd proportional dem Messweg verhält und der dafür erforderliche Messverstärker extrem unterschiedlich belastet wird. Aufgrund der unterschiedlich hohen Ströme wird der Messtaster auch thermisch unterschiedlich belastet, so dass mit einem solchen Messtaster auch bei hohem elektrischem Aufwand zur Linearisierung der Messwerte keine brauchbaren Messergebnisse zu erzielen sind.

Der Erfindung liegt deshalb die Aufgabe zugrunde Vorrichtung zur Überprüfung der Maß-, Form- und Lagetoleranzen eines mechanischen Werkstückes so auszugestalten, dass bei geringer Bauhöhe und einfacher Bauweise ein möglichst großer Messweg und eine hohe Messgenauigkeit erreicht werden.

Zur Lösung dieser Aufgabe wird bei einer Vorrichtung der eingangs beschriebenen Gattung vorgeschlagen, dass das Gehäuse aus zwei schalenartigen, zumindest weitgehend gleich ausgebildeten und über Planflächen miteinander verbindbaren Gehäusehälften besteht, dass sich - von den Planflächen ausgehend - in jeder Gehäusehälfte Ausnehmungen für jeweils eine von miteinander fluchtenden Induktionsspulen gleicher Baugröße und deren Anschlussleitungen befinden und dass sich am äußeren Ende der beiden jeweils eine Induktionsspule aufnehmenden Ausnehmungen ebenfalls fluchtend gegenüberliegende Bohrungen zur Führung des koaxial durch die beiden Induktionspulen ragenden und beidendig aus den beiden Gehäusehälften nach außen geführten Taststiftes befinden.

Durch diese Ausgestaltung wird bei einfachstem Aufbau der Messtaster und bei einem verhältnismäßig großen zur Verfügung stehenden Messweg eine hohe Messgenauigkeit erreicht. Zusätzlich wird der Anwendungsbereich wesentlich erweitert und der Aufwand für den Zusammenbau, die Wartung und den Service reduziert.

Weitere Merkmale einer Vorrichtung gemäß der Erfindung sind in den Ansprüchen 2 bis 21 offenbart.

Die Erfindung sowie weitere Vorteile derselben werden nachfolgend anhand in einer Zeichnung dargestellter Ausführungsbeispiele näher erläutert. Dabei zeigen
- Fig. 1: den grundsätzlichen Aufbau eines Messtasters gemäß der Erfindung im Schnitt,
- Fig. 2: eine Aufrissdarstellung eines in der Praxis einsetzbaren Messtaster im Schnitt,
- Fig. 3: einen Schnitt durch den Messtaster der Fig. 2 gemäß der Linie III - III,
- Fig. 4: eine Aufrissdarstellung einer weiteren Ausbildung eines Messtasters gemäß der Erfindung im Schnitt,
- Fig. 5: eine weitgehende mit den Figuren 2 und 4 übereinstimmende Darstellung mit einer Kappe auf dem einem Träger zugewandten Gehäuseteil,
- Fig. 6: eine andere Ausgestaltung der Kappe nach der Fig. 5 und
- Fig. 7: eine als Drehsicherung dienende Kappe.

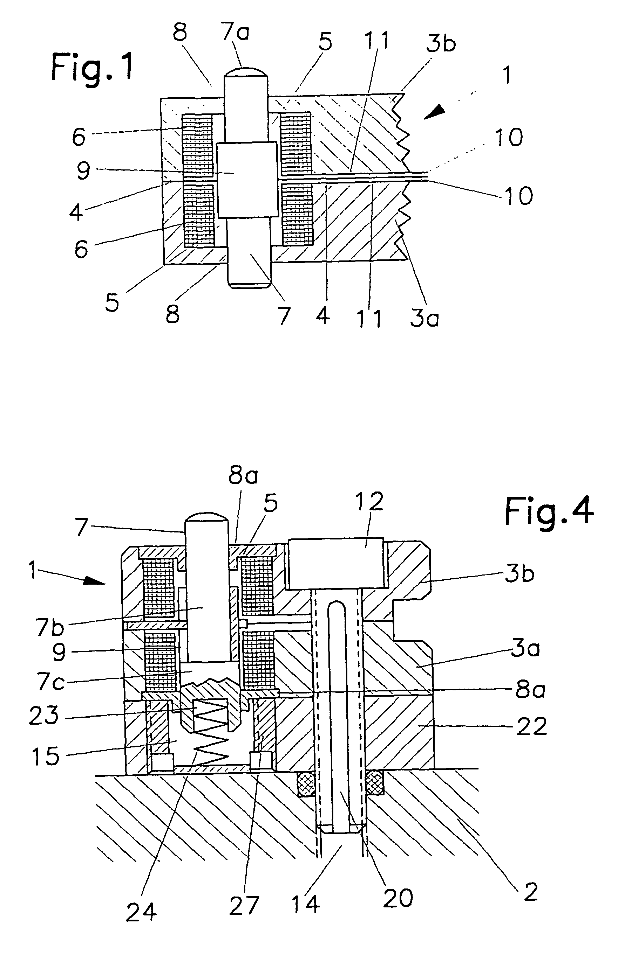

In den Fig. 1 bis 4 und 5 der Zeichnung ist jeweils ein Messtaster 1 gezeigt, der zur Überprüfung der Maße oder Maßabweichungen eines mechanischen Werkstückes dient, welches in der Zeichnung nicht dargestellt ist. Dieser Messtaster 1 besteht immer aus einem Gehäuse 3, welches gemäß der Erfindung aus zwei schalenartigen Gehäuseteilen 3a, 3b zusammengesetzt ist (Fig.1). Dabei sind beide Gehäuseteile 3a, 3b im Bereich von spiegelbildlich zueinander ausgebildeten Planflächen 4 in vorteilhafter Weise durch Klebung fest miteinander verbunden. Aus Funktions-und Fertigungsgründen ist es zweckmäßig, dass beide Gehäuseteile 3a, 3b identisch ausgebildet sind. Jedes der beiden Gehäuseteile 3a, 3b besitzt eine zu seiner Planfläche 4 vollkommen offene, zylindrische Aussparung 5, in die jeweils eine Induktionsspule 6 eingesetzt ist. Beide Induktionsspulen 6 verlaufen fluchtend zueinander und enden vorteilhaft mit geringem Abstand vor den Planflächen 4.

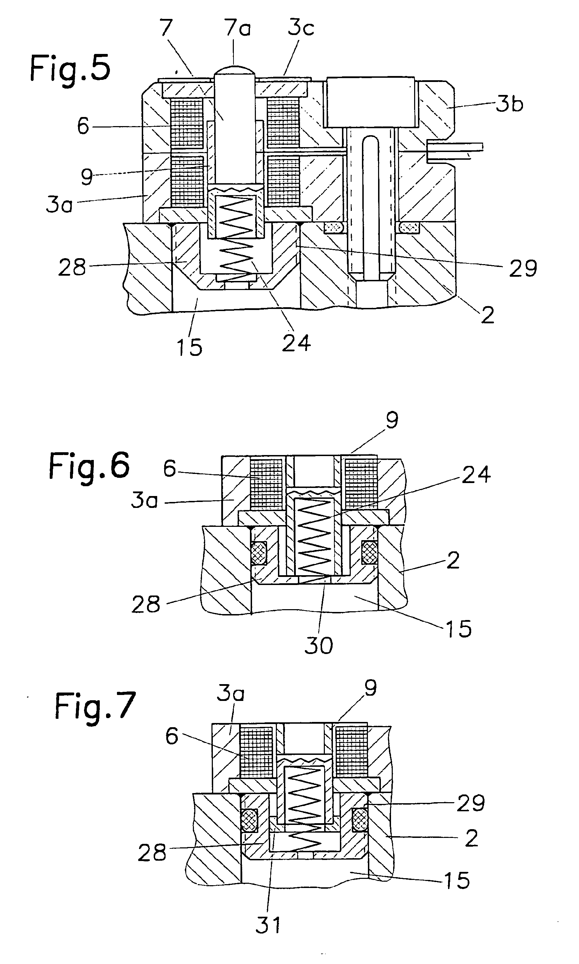

Im Inneren der beiden Induktionsspulen 6 befindet sich ein koaxial zu denselben verlaufender Taststift 7, der mit seinen beiden Enden durch Bohrungen 8 in den Gehäusehälften 3a, 3b nach außen ragt und an seinem aus der Gehäusehälfte 3b herausragenden Ende mit einer Antastfläche 7a versehen ist. Ausschließlich in den Bohrungen 8 ist der aus nichtmagnetisierbarem Werkstoff, beispielsweise Keramik, bestehende Taststift 7 geführt, wobei diese Bohrungen 8 - wie beispielsweise in der Fig. 4 dargestellt - auch in Lagerschalen 8a aus einem geeigneten Werkstoff, beispielsweise aus Bronze, Kunststoff oder Keramik verlegt sein können. Der Außendurchmesser des Taststiftes 7 in der Fig. 1 ist erheblich kleiner als der Innendurchmesser der Induktionsspulen 6 gehalten. Dies ermöglicht es, auf dem Taststift 7 einen aus magnetisierbarem Werkstoff bestehende und als Hülse ausgebildeten Ablenkkörper 9 anzuordnen, der mit dem Taststift 7 innerhalb der Induktionsspulen 6 verschiebbar ist, jedoch keinerlei Führung des Taststiftes 7 übernimmt.

In der gezeichneten Grundstellung des Taststiftes 7 nimmt der Ablenkkörper 9 eine Lage mittig zu den beiden Induktionsspulen 6 ein. Diese Lage ist die sogenannte Nulltastposition, um die sich der Taststift 7 und damit der Ablenkkörper 9 bewegt. Jede Induktionsspule 6 ist mit zwei Anschlussleitungen 10 versehen, die durch entsprechende Aussparungen 11 und 11a in den Planflächen 4 der beiden Gehäusehälften 3a, 3b nach außen geführt sind. Jede Veränderung der Lage des Taststiftes 7 und damit des Ablenkkörpers 9 innerhalb der beiden Induktionsspulen 6 wird als Widerstandsänderung über die Anschlussleitungen 10 an eine Mess- und Auswerteinrichtung signalisiert.

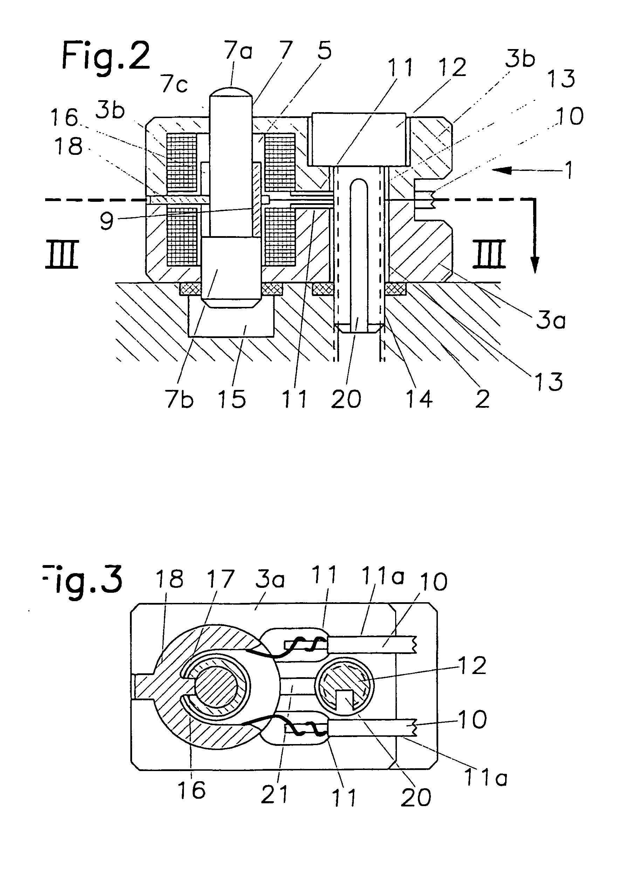

Ein, meistens jedoch mehrere Messtaster 1 mit diesem grundsätzlichen Aufbau sind gemäß der Fig. 2 direkt auf einem Träger 2 befestigt. Die Befestigung der Messtaster 1 - hintereinander oder nebeneinander - auf dem Träger 2 erfolgt hier mittels einer Schraube 12, die durch fluchtende Bohrungen 13 beider Gehäusehälften 3a, 3b ragt und in eine Gewindebohrung 14 des Trägers 2 eingeschraubt ist. Dabei kann der Träger 2 besondere, jedoch nicht gezeichnete Nuten aufweisen, die jeweils einen oder auch mehrere Messtaster 1 aufnehmen. Über den Träger 2 werden die Messtaster 1 in die angestrebte Messposition bewegt. Gemäß diesem konkreten Ausführungsbeispiel besitzt hier der Taststift 7 zwei Bereiche 7b und 7c mit unterschiedlichem Durchmesser. Dabei ist der größere, in der Fig. 2 der Zeichnung untere Bereich 7c des Taststiftes 7 in der Gehäusehälfte 3a geführt und ragt in eine Kammer 15 des Trägers 2. Der Ablenkkörper 9 befindet sich auf dem Bereich 7b des Taststiftes 7 mit dem kleineren Durchmesser. Dabei ist der Außendurchmesser des Ablenkkörpers 9 geringfügig kleiner als der Außendurchmesser des Bereiches 7c des Taststiftes 7. Auch hier nimmt der Ablenkkörper 9 in seiner Grundstellung eine Lage mittig zu den beiden Induktionsspulen 6 ein.

Wie insbesondere die Fig. 3 deutlich erkennen lässt, ist die Spulenkernhülse 9 in diesem Ausführungsbeispiel an ihrem Umfang mit einem in axialer Richtung verlaufenden Schlitz 16 versehen, in den eine Nase 17 einer Scheibe 18 ragt. Diese Scheibe 18 wird von einer entsprechend geformten Ausnehmung 19 aufgenommen, die sich jeweils zur Hälfte in jeder der beiden Gehäusehälften 3a, 3b befindet. Die Scheibe 18 mit der Nase 17 verhindert, dass sich der Taststift 7 bei seiner axialen Verschiebung verdrehen kann. Auch hier ist in jeder Planfläche 4 eine die Anschlussleitungen 10 aufnehmende Aussparung 11 und 11a vorgesehen. Der größere Bereich der Aussparung 11 (Fig.3) dient zur Aufnahme der Lötstelle von Spulendraht mit Anschlussleitung 10.

Sowohl die Kammer 15 mit ihrem Kanal 15a als auch die Gewindebohrung 14 im Träger 2 sind an nicht gezeichnete Leitungen für ein gasförmiges Druckmedium angeschlossen und über elastische Dichtungen zwischen Messtaster 1 und Träger 2 nach außen hin abgedichtet. Während das Druckmedium in der Kammer 15 auf die vergrößerte Stirnfläche des Bereiches 7c des Taststiftes 7 wirkt, gelangt das über die Gewindebohrung 14 zugeführte gasförmige Druckmedium über Nut 20 der Schraube 12 und eine weitere Nut 21 in den Planflächen 4 der beiden Gehäusehälften 3a, 3b in die zylindrische Aussparung 5, wo der Druck auf die Ringfläche des Taststiftes 7 wirkt. Durch entsprechende pneumatische Beaufschlagung der Aussparung 5 und der Kammer 15 wird eine axiale Verschiebung des Taststiftes 7 in die eine oder andere Richtung erreicht. Bedarfsweise kann zwischen dem Boden der Kammer 15 und der größeren Stirnfläche des Taststiftes 7 eine vorgespannte Druckfeder 24 (wie bei der Fig. 4) vorgesehen sein. In einem solchen Fall kann die Zuführung eines gasförmigen Druckmediums in die Kammer 15 entfallen. Durch das in die Aussparung 5 eingeleitete Druckmedium kann der Taststift 7 gegen die Kraft der vorgespannten Druckfeder lediglich in Richtung der Kammer verschoben werden.

Der Messtaster 1 der Fig. 4 stimmt in seiner Ausbildung weitgehend mit dem Messtaster 1 der Figuren 2 und 3 überein. Hier ist jedoch das Gehäuse 3 nicht direkt, sondern über ein zusätzliches, vorzugsweise angeklebtes Anschlussgehäuse 22 mittels der Schraube 12 dichtend an dem Träger 2 befestigt. Der dickere und dem Träger 2 zugewandte Bereich 7c des Taststiftes 7 ist an seinem freien Ende mit einem Sackloch 23 versehen, in das eine vorgespannte Druckfeder 24 eingesetzt ist. Mit ihrem anderen Ende stützt sich die vorgespannte Druckfeder 24 auf dem Boden einer Verschlussschraube 27 ab, die die bereits anhand der Fig. 2 erwähnte Kammer 15 nach unten abschließt. Diese Verschlussschraube 27 ermöglicht es, dass der Taststift 7 leicht und vor allem in kürzester Zeit ausgewechselt werden kann.

Bedarfsweise können die Anschlussleitungen 10 in einer nicht gezeichneten Hülse mit Knickschutzspirale mit einem abgeschirmten Kabel verbunden werden, welches an die Messelektronik angeschlossen ist.

Seitlich am Gehäuse 3 können besondere, nicht gezeichnete Nuten ausgebildet sein, in denen die Anschlussleitungen 10 geschützt verlegbar sind. Zur Bildung eines solchen Schutzbereiches kann bedarfsweise auch die obere Gehäusehälfte 3b breiter als die untere Gehäusehälfte 3a ausgebildet sein. In einem derartigen Hohlraum können auch die Anschlussleitungen benachbarter Messtaster 1 geschützt an dem betreffenden Gehäuse vorbeigeführt werden. Um die Anschlussleitungen 10 beispielsweise auch im Bereich von zwei mit Abstand voneinander angeordneten Messtastern 1 zu schützen, kann zwischen jeweils zwei Messtastern 1 ein Distanzgehäuse mit gleichem Profil vorgesehen sein.

Durch eine äußere Beschädigung oder Verschleiß kann es auch bei sachgerechter Nutzung der Vorrichtung erforderlich werden, dass ein Messtaster 7 oder zumindest ein Teil desselben ausgewechselt werden muss. Dies führt bei dem Messtaster 1 der Fig. 4 zu keinerlei Problemen, da dort die Kammer 15 der Anschlussplatte 22 durch eine Verschlussschraube 27 verschlossen ist. Bei einer Demontage des Messtasters 1 nach der Fig. 2 kann jedoch der Taststift 7 herausfallen. Um dies grundsätzlich auszuschließen, ist es gemäß den Fig. 5 bis 7 der Zeichnung möglich, den Messtaster 1 in seinem unter dem Taststift 7 befindlichen Bereich durch eine Kappe 28 aus einem weichmagnetischen Werkstoff zu verschließen, die an dem Gehäuseteil 3a oder an einem fest mit diesem Gehäuseteil 3a verbundenen Teil, beispielsweise einer Lagerschale 8a, durch Klebung oder Heftung befestigt ist.

Durch diese Kappen 28 wird die Spule 6 im unteren Bereich magnetisch abgeschirmt. Jede Kappe 28 der Figuren 5 bis 7 ist an ihrer äußeren Mantelfläche mit einem Gewinde, vorzugsweise mit einem Feingewinde 29 versehen, welches jedoch nicht in die Kammer 15 eingeschraubt, sondern nur lose eingesteckt ist. Dieses Feingewinde 29 dient ausschließlich dazu, die Kappe 28 mittels einer Gewindehülse wieder vom Gehäuseteil 3a abziehen zu können.

Die Klebung oder Heftung bildet dabei eine Art Sollbruchstelle. Ferner ist bei diesem Ausführungsbeispiel im Bereich der Tastfläche 7a des Tasters 7 auf das Gehäuseteil 3b bzw. einem fest mit demselben verbundenen Teil, wie die Lagerschale 8a, eine Scheibe 3c aus einem weichmagnetischen Werkstoff befestigt, durch die der Taststift 7 geführt wird und die der magnetischen Abschirmung der darunter liegenden Induktionsspule 6 dient, wenn die dazwischen liegende Lagerschale 8a aus einem nichtmagnetischen Werkstoff besteht. Die Befestigung dieser Scheibe 3c kann beispielsweise durch Lötung oder Klebung erfolgen. Die magnetische Abschirmung der dem Träger 2 zugewandten zweiten Induktionsspule 6 erfolgt vorzugsweise durch die Kappe 28, den Träger 2 oder das Anschlussgehäuse 22 mit der Verschlussschraube 27. Auf dem Boden der Kappe 28 der Fig. 5 stützt sich eine Druckfeder 24 ähnlich der Fig. 4 ab. Auch hier wird - wie bei dem Messtaster 1 der Fig. 4 - der Taststift 7 durch die über die Nut 20 in der Schraube 12 zuführbare Druckluft gegen die Kraft der Feder 24 zurückgestellt. Der damit aufgebaute Innendruck im Gehäuse 3a, 3b sorgt darüber hinaus dafür, dass keine Verunreinigungen, beispielsweise Flüssigkeit, in den Innenraum 5 des Tasters 1 eindringen kann.

Bei dem Ausführungsbeispiel der Fig. 6 ist die Feder 24 allerdings als Zugfeder ausgebildet und mit ihrem unteren, dem Taststift 7 abgewandten Ende in einer Öffnung 30 der Kappe 28 fixiert. Hier kann der Taststift 7 über die Kammer 15 und die Öffnung 30 mit Druckluft beaufschlagt und entgegen der Kraft der Feder 24 pneumatisch zugestellt werden. Falls bei dieser Ausgestaltung der Aufbau eines Innendruckes in der Aussparung 5 erwünscht ist, kann auch hier gleichzeitig über die Nut 20 in der Schraube 12 Druckluft zugeführt werden. Dieser Innendruck muss jedoch so eingestellt werden, dass er den von der Feder 24 zurückgehaltenen Taststift 7 bei der pneumatischen Ansteuerung von außen nicht daran hindert, sich mit seiner Tastfläche 7a funktionsgerecht an das zu messende Werkstück anzulegen.

Bei dem in der Fig. 7 gezeichneten Ausführungsbeispiel weist die Kappe 28 innen einen profilierten, beispielsweise quadratischen Querschnitt auf. Auf den unteren Bereich 7c des Taststiftes 7 ist eine drehfest mit demselben verbundene, profilierte Scheibe 31 aufgebracht, deren äußere Grundfläche in etwa dem inneren Querschnitt der Kappe 28 entspricht. Durch eine solthe Ausgestaltung ist der Taststift 7 wie bei dem Ausführungsbeispiel der Figuren 2 und 3 gegen Verdrehung gesichert. Eine solche Scheibe 31 ist auch bei den Ausführungsbeispielen der Fig. 5 und 6 möglich. Dies setzt dort allerdings auch eine entsprechende innere Profilierung der Kappen 28 voraus.

## Patentansprüche

1. Vorrichtung zur Überprüfung der Maß-, Form- und Lagetoleranzen eines mechanischen Werkstückes, bestehend aus mindestens einem Messtaster mit jeweils einem an einem Träger befestigbaren Gehäuse mit zwei getrennten Induktionsspulen und einem sich auf der Messoberfläche des Werkstückes abstützenden und aus einem nichtmagnetisierbaren Werkstoff gebildeten Taststift, der als Kolben ausgebildet ist und einen als Hülse ausgebildeten Ablenkkörper trägt, wobei der Taststift mit dem Ablenkkörper durch eine Kraft in seine Messstellung bewegbar ist,
**dadurch gekennzeichnet,**
**dass** das Gehäuse (3) aus zwei schalenartigen, zumindest weitgehend gleich ausgebildeten und über Planflächen (4) miteinander verbindbaren Gehäusehälften (3a, 3b) besteht, dass sich - von den Planflächen (4) ausgehend- in jeder Gehäusehälfte (3a, 3b) Ausnehmungen (5) für jeweils eine von miteinander fluchtenden Induktionsspulen (6) gleicher Baugröße und deren Anschlussleitungen (10) befinden und dass sich am äußeren Ende der beiden jeweils eine Induktionsspule (6) aufnehmenden Ausnehmungen (5) ebenfalls fluchtend gegenüberliegende Bohrungen (8) zur Führung des koaxial durch die beiden Induktionspulen (6) ragenden und beidendig aus den beiden Gehäusehälften (3a, 3b) nach außen geführten Taststiftes (7) befinden.

2. Vorrichtung nach Anspruch 1,
**dadurch gekennzeichnet,**
**dass** der Ablenkkörper (9) in der Mittelstellung des Taststiftes (7) zu gleichen Teilen in jede Induktionsspule (6) ragt.

3. Vorrichtung nach Anspruch 1 oder 2,
**dadurch gekennzeichnet,**
**dass** die Höhe der Induktionsspulen (6) nur geringfügig größer als der Messweg des Taststiftes (7) ist.

4. Vorrichtung nach mindestens einem der Ansprüche 1 bis 3,
**dadurch gekennzeichnet,**
**dass** der Taststift (7) aus keramischem Werkstoff gebildet ist.

5. Vorrichtung nach mindestens einem der Ansprüche 1 bis 4,
**dadurch gekennzeichnet,**
**dass** die Bohrungen (8) in den beiden Gehäusehälften (3a, 3b) zur Führung des Taststiftes (7) mit Gleitlagern bestückt sind.

6. Vorrichtung nach mindestens einem der Ansprüche 1 bis 5,
**dadurch gekennzeichnet,**
**dass** die aus den beiden Gehäusehälften (3a, 3b) herausragenden Enden des Taststiftes (7) unterschiedliche Durchmesser aufweisen, aber exakt koaxial verlaufend ausgebildet sind.

7. Vorrichtung nach mindestens einem der Ansprüche 1 bis 6,
**dadurch gekennzeichnet,**
**dass** das aus einer Gehäusehälfte (3a) herausragende und der Antastfläche (7a) abgewandte Ende mit dem größeren Durchmesser des Taststiftes (7) durch eine mit der Gehäusehälfte (3a) verbundene Kappe (28) verschlossen ist.

8. Vorrichtung nach Anspruch 7,
**dadurch gekennzeichnet,**
**dass** zwischen dem Taststift (7) und der Kappe (28) eine Zug- oder eine Druckfeder (24) angeordnet ist.

9. Vorrichtung nach Anspruch 8,
**dadurch gekennzeichnet,**
**dass** die Kappe (28) an der Gehäusehälfte (3a) durch Klebung oder Heftung befestigt ist.

10. Vorrichtung nach mindestens einem der Ansprüche 1 bis 8,
**dadurch gekennzeichnet,**
**dass** die Kappe (28) an ihrer Innenwandung profiliert ausgebildet ist und eine mit dem Taststift (7) verbundene, ebenfalls profilierte Scheibe (31) als Verdrehsicherung aufnimmt.

11. Vorrichtung nach mindestens einem der Ansprüche 1 bis 10,
**dadurch gekennzeichnet,**
**dass** die Spulenkernhülse (9) einen in axialer Richtung verlaufenden Schlitz (16) zur Aufnahme der Nase (17) einer Verdrehsicherung (18) aufweist.

12. Vorrichtung nach mindestens einem der Ansprüche 1 bis 11,
**dadurch gekennzeichnet,**
**dass** das Gehäuse (3) über eine Befestigungsschraube (12) mit einem Anschluss für die Zufuhr eines gasförmigen Mediums zur Spülung und Reinhaltung des Innenraumes (5) des Gehäuses (3a, 3b) und zur Rückstellung des Taststiftes (7) verbunden ist.

13. Vorrichtung nach mindestens einem der Ansprüche 1 bis 10,
**dadurch gekennzeichnet,**
**dass** das gasförmiges Medium dem Gehäuse-Innenraum über den den Messtaster (1) aufnehmenden Träger (2) zuführbar ist.

14. Vorrichtung nach mindestens einem der Ansprüche 1 bis 10,
**dadurch gekennzeichnet,**
**dass** das gasförmiges Medium dem Innenraum des Gehäuses (3) über eine zwischen dem Gehäuse (3) und dem Träger (2) befindliche Anschlussplatte (22) zuführbar ist.

15. Vorrichtung nach mindestens einem der Ansprüche 1 bis 14,
**dadurch gekennzeichnet,**
**dass** eine Anschlussplatte (22) im Bereich des Taststiftes (7) eine durch eine Verschlussschraube (27) abgedeckte und im Querschnitt größer als der Taststift (7) ausgebildete Öffnung aufweist.

16. Vorrichtung nach Anspruch 14,
**dadurch gekennzeichnet,**
**dass** zwischen der Verschlussschraube (27) und dem Taststift (7) eine vorgespannte Druck- oder Zugfeder (24) angeordnet ist.

17. Vorrichtung nach mindestens einem der Ansprüche 1 bis 16,
**dadurch gekennzeichnet,**
**dass** das Gehäuse (3) im Austrittsbereich der Anschlussleitungen (10) Aussparungen zur beliebigen Verlegung und zur Umlenkung der Anschlussleitungen (10) aufweist.

18. Vorrichtung nach mindestens einem der Ansprüche 1 bis 17,
**dadurch gekennzeichnet,**
**dass** die dem Träger (2) zugewandte Gehäusehälfte (3a) zumindest an einer Seite schmäler als die andere Gehäusehälfte (3b) ausgebildet ist.

19. Vorrichtung nach mindestens einem der Ansprüche 1 bis 16,
**dadurch gekennzeichnet,**
**dass** ein Zwischenraum zwischen zwei auf dem Träger (2) befestigten Messtastern (1) durch ein Distanzgehäuse geschlossen ist.

20. Vorrichtung nach mindestens einem der Ansprüche 1 bis 18,
**dadurch gekennzeichnet,**
**dass** die Messtaster (1) in einer Nut des Trägers (2) angeordnet sind.

21. Vorrichtung nach mindestens einem der Ansprüche 1 bis 19,
**dadurch gekennzeichnet,**
**dass** zumindest einem Messtaster (1) eine eine Unlinearität eliminierende Messelektronik zugeordnet ist.

## Claims

1. Device for checking the dimensional, form and positional tolerances of a mechanical workpiece, consisting of at least one measuring probe with a respective housing which can be fastened to a support and with two separate induction coils and a feeler formed of a non-magnetisable material supported on the surface of the workpiece to be measured, the feeler being designed as a piston and being provided with a deflection body designed as a sleeve, wherein the feeler can be moved together with the deflection body into its measuring position by a force, **characterised in that** the housing (3) consists of two at least substantially identical shell-shaped housing halves (3a, 3b) which can be joined together by means of plane surfaces (4), that respective recesses (5) each for one of the induction coils (6) of identical dimensions aligned with one another and the connecting lines (10) thereof are situated in each housing half (3a, 3b), departing from the plane surfaces (4), and that opposing bores (8) also aligned with one another for guiding the feeler (7) projecting coaxially through the two induction coils (6) and guided outwardly from the two housing halves (3a, 3b) at both ends are situated at the outer ends of the two recesses (5) each receiving an induction coil (6).

2. Device according to claim 1, **characterised in that** the deflection body (9) projects equally into each induction coil (6) in the centre position of the feeler (7).

3. Device according to claim 1 or claim 2, **characterised in that** the height of the induction coils (6) is only slightly greater than the measuring distance of the feeler (7).

4. Device according to at least one of claims 1 to 3, **characterised in that** the feeler (7) is formed of ceramic material.

5. Device according to at least one of claims 1 to 4, **characterised in that** the bores (8) in the two housing halves (3a, 3b) for guiding the feeler (7) are provided with plain bearings.

6. Device according to at least one of claims 1 to 5, **characterised in that** the ends of the feeler (7) projecting from the two housing halves (3a, 3b) have different diameters, but are exactly coaxial.

7. Device according to at least one of claims 1 to 6, **characterised in that** the end of the feeler (7) having the larger diameter remote from the contact surface (7a) and projecting from one housing half (3a) is closed by a cap (28) connected to the housing half (3a).

8. Device according to claim 7, **characterised in that** a tension spring or a compression spring (24) is arranged between the feeler (7) and the cap (28).

9. Device according to claim 8, **characterised in that** the cap (28) is fastened to the housing half (3a) by gluing or tacking.

10. Device according to at least one of claims 1 to 8, **characterised in that** the cap (28) is profiled on its inner wall and receives a disc (31) which is also profiled and which is connected to the feeler (7) as an anti-rotation element.

11. Device according to at least one of claims 1 to 10, **characterised in that** the coil core housing (9) has an axially extending slot (16) for receiving the projection (17) of an anti-rotation element (18).

12. Device according to at least one of claims 1 to 11, **characterised in that** the housing (3) is connected by means of a fastening screw (12) to a connection for the supply of a gaseous medium for rinsing the interior (5) of the housing (3a, 3b) and keeping it clean and for resetting the feeler (7).

13. Device according to at least one of claims 1 to 10, **characterised in that** the gaseous medium can be supplied to the interior of the housing via the support (2) receiving the measuring probe (1).

14. Device according to at least one of claims 1 to 10, **characterised in that** the gaseous medium can be supplied to the interior of the housing (3) via a connecting plate (22) situated between the housing (3) and the support (2).

15. Device according to at least one of claims 1 to 14, **characterised in that** a connecting plate (22) in the region of the feeler (7) has an opening which is covered by a screw plug (27) and which has a larger cross section than the feeler (7).

16. Device according to claim 14, **characterised in that** a pretensioned compression spring or tension spring (24) is arranged between the screw plug (27) and the feeler (7).

17. Device according to at least one of claims 1 to 16, **characterised in that** the housing (3) is provided in the exit region of the connecting lines (10) with cavities for the installation and diversion of the connecting lines (10) as desired.

18. Device according to at least one of claims 1 to 17, **characterised in that** the housing half (3a) directed towards the support (2) is narrower than the other housing half (3b) at least on one side.

19. Device according to at least one of claims 1 to 16, **characterised in that** a space between two measuring probes (1) fastened to the support (2) is closed by a spacer housing.

20. Device according to at least one of claims 1 to 18, **characterised in that** the measuring probes (1) are arranged in a groove in the support (2).

21. Device according to at least one of claims 1 to 19, **characterised in that** an electronic measuring system eliminating non-linearity is associated with at least one measuring probe (1).

## Revendications

1. Dispositif destiné à la vérification des tolérances de dimension, de forme et de position d'une pièce mécanique, constitué d'au moins un palpeur de mesure avec un boitier fixé à un support avec deux bobines d'induction séparées et palpeur s'appuyant sur la surface de mesure de la pièce et constitué d'un matériau non magnétisable qui est conçu comme un piston et qui porte un corps déflecteur conçu co.mme une douille, le palpeur étant déplaçable avec le corps déflecteur dans sa position de mesure au moyen d'une force, **caractérisé en ce que** le boitier (3) est constitué de deux moitiés de boitier (3a, 3b) en forme de cuvette, réalisées au moins de manière sensiblement identique et pouvant être reliées l'une à l'autre par des surfaces planes (4), **en ce que** - en partant des surfaces planes (4) - des évidements (5) sont prévus dans chaque moitié de boîtier (3a, 3b) pour l'une des bobines d'induction (6) alignées l'une sur l'autre de même taille et leurs conduits de raccordement (10) et **en ce qu'**il est prévu, à l'extrémité extérieure des deux évidements (5) recevant chacun une bobine d'induction (6), des alésages (8) opposés également alignés l'un sur l'autre pour le guidage du palpeur (7) faisant saillie coaxialement à travers les deux bobines d'induction (6) et dirigé vers l'extérieur hors des deux moitiés de boitier (3a, 3b) aux deux extrémités.

2. Dispositif selon la revendication 1, **caractérisé en ce que** le corps déflecteur (9) fait saillie en parties égales dans chaque bobine d'induction (6) dans la position médiane du palpeur (7).

3. Dispositif selon la revendication 1 ou 2, **caractérisé en ce que** la hauteur des bobines d'induction (6) est seulement légèrement plus importante que la distance de mesure du palpeur (7).

4. Dispositif selon au moins l'une des revendications 1 à 3, **caractérisé en ce que** le palpeur (7) est fait en un matériau céramique.

5. Dispositif selon au moins l'une des revendications 1 à 4, **caractérisé en ce que** les alésages (8) dans les deux moitiés de boitier (3a, 3b) sont équipés de paliers lisses pour le guidage du palpeur (7).

6. Dispositif selon au moins l'une des revendications 1 à 5, **caractérisé en ce que** les extrémités du palpeur (7) faisant saillie hors des deux moitiés de boitier (3a, 3b) ont des diamètres différents, mais s'étendent exactement coaxialement.

7. Dispositif selon au moins l'une des revendications 1 à 6, **caractérisé en ce que** l'extrémité faisant saillie hors d'une moitié de boîtier (3a) et opposée à la surface de palpation (7a) avec le plus grand diamètre du palpeur (7) est obturée par un capuchon (28) relié à la moitié de boitier (3a).

8. Dispositif selon la revendication 7, **caractérisé en ce qu'**un ressort de traction ou un ressort de pression (24) est placé entre le palpeur (7) et le capuchon (28).

9. Dispositif selon la revendication 8, **caractérisé en ce que** le capuchon (28) est fixé à la moitié de boitier (3a) par collage ou adhérence.

10. Dispositif selon au moins l'une des revendications 1 à 8, **caractérisé en ce que** le capuchon (28) est profilé sur sa paroi intérieure et reçoit une rondelle également profilée (31) relié au palpeur (7) qui sert de sécurité contre la torsion.

11. Dispositif selon au moins l'une des revendications 1 à 10, **caractérisé en ce que** la douille du noyau de bobine (9) comporte une fente (16) s'étendant dans le sens axial pour la réception du taquet (17) d'une sécurité contre la torsion (18).

12. Dispositif selon au moins l'une des revendications 1 à 11, **caractérisé en ce que** le boitier (3) est relié, par l'intermédiaire d'une vis de fixation (12), à un raccord pour l'alimentation d'un fluide gazeux pour le rinçage et le nettoyage de l'espace intérieur (5) du boîtier (3a, 3b) et pour la remise à zéro du palpeur (7).

13. Dispositif selon au moins l'une des revendications 1 à 10, **caractérisé en ce que** le fluide gazeux peut être amené dans l'espace intérieur du boîtier par l'intermédiaire du support (2) recevant le palpeur de mesure (1).

14. Dispositif selon au moins l'une des revendications 1 à 10, **caractérisé en ce que** le fluide gazeux peut être amené dans l'espace intérieur du boîtier (3) par l'intermédiaire d'une plaque de raccord (22) se trouvant entre le boîtier (3) et le support (2).

15. Dispositif selon au moins l'une des revendications 1 à 14, **caractérisé en ce qu'**une plaque de raccord (22) comporte dans la zone du palpeur (7) une ouverture recouverte par une vis d'obturation (27) et dont la section transversale est plus grande que le palpeur (7).

16. Dispositif selon la revendication 14, **caractérisé en ce qu'**un ressort de pression ou un ressort de tension précontraint (24) est placé entre la vis d'obturation (27) et le palpeur (7).

17. Dispositif selon au moins l'une des revendications 1 à 16, **caractérisé en ce que**, dans la zone de sortie des conduits de raccordement (10), le boîtier (3) comporte des évidements pour la pose au choix et pour la déflection des conduits de raccordement (10).

18. Dispositif selon au moins l'une des revendications 1 à 17, **caractérisé en ce que** la moitié de boîtier (3a) dirigée vers le support (2) est plus étroite que l'autre moitié de boîtier (3b) au moins d'un côté.

19. Dispositif selon au moins l'une des revendications 1 à 16, **caractérisé en ce qu'**un espace intermédiaire entre deux palpeurs de mesure (1) fixés au support (2) est obturé par un boitier d'écartement.

20. Dispositif selon au moins l'une des revendications 1 à 18, **caractérisé en ce que** les palpeurs de mesure (1) sont placés dans une rainure du support (2).

21. Dispositif selon au moins l'une des revendications 1 à 19, **caractérisé en ce qu'**une électronique de mesure éliminant une non linéarité est associé à au moins un palpeur de mesure (1).
